# EUROPEAN PATENT APPLICATION

(11) **EP 3 504 985 A1**
(43) Date of publication of application: **03.07.2019**
(21) Application number: 18000052.3
(22) Date of filing: 23.01.2018
(51) Int. Cl.: A23L 11/10, A23B 9/02

(54) **PROCESS FOR THE PREPARATION OF BOILED LEGUMES AND PRODUCT OBTAINABLE BY THIS METHOD**

(30) Priority: 29.12.2017 TR 201722781
(71) Applicant: Duru Bulgur Gida San.Ve Tic. A.S., Karaman (TR)
(72) Inventor: Duru, Ziya, Karaman (TR)
(74) Representative: Sevinç, Cenk

(57) **Abstract**

The invention relates to a product comprising practical boiled legumes which allows the consumers to get healthy, natural boiled legumes any time they want, and which can be used in salads, soups, haricot bean salad and in meals, and in the structure of which the microorganisms are destroyed at high pressure and temperature, and which can be safely stored as long as the packaging is not opened during the shelf life.

## Description

### Related Technical Field

The invention relates to a product comprising practical boiled legumes which allows the consumers to get healthy, natural boiled legumes any time they want, and which can be used in salads, soups, haricot bean salad and in meals, and in the structure of which the microorganisms are destroyed at high pressure and temperature, and which can be safely stored as long as the packaging is not opened during the shelf life.

### State Of The Art

The seeds separated from pods by drying fresh vegetables known as e.g. bean, chick pea, lentil, broad bean, green pea, black-eyed pea which are called as edible legumes and bean legumes are called as legumes. The percentage of protein in beans of legumes reaches up to 40%. For this reason, it is a food group rich in terms of protein and amino acid. Proteins of beans of legumes contain globulin mostly. Sufficient consumption of legumes provides fat homeostasis control and reduces cardiovascular disease risk because legumes contain high fiber content and low glycemic index and comprise phytosterols, saponins, oligosaccharides. Owing to its low Glycemic index and high fiber ratio it provides glycemic control in diabetes patients and prevents them to be insulin-resistant. The consumption of rich vegetable protein sources such as beans, chickpeas, lentils, green peas at least 3-4 times a week is important for health. These foods are rich in both vegetable protein and carbohydrate, and they also protect against intestinal cancer as they prevent constipation by regulating the intestinal activity due to the high fiber they contain. Legume beans are valuable foodstuffs that supply both protein and carbohydrate. They supply protein in the human body the most after food of animal origin. Proteins provide fertility, growth, development, making of raw material necessary for our body, renewing of the aging cells and continuation of life.

In addition to the importance of legumes in human nutrition and health, the necessity of soaking, boiling, cooking, etc., in order to consume this food group causes various improvements to be made in the respective field. The long-time period need for the complete cooking of unprocessed legumes has led to the production of semi-processed or pre-processed legumes. In the process of these products, the legumes are first subjected to heat treatment and then packaged to be presented to the consumer. There are basically four different types of autoclaves used in production of convenience food. Steam type autoclave, hot water-steam spray autoclave, water immersion autoclave and steam air autoclave. In terms of product characterization, investment costs and the like, the most common used autoclave is the water immersion autoclave. In this type of autoclave, however, the water in the medium is heated to the sterilization temperature, which results in an increase of some taste losses of the product. The sterilization period of tin cans used in autoclave is long, and tin migration into the product can occur in time. Tin is not practical in terms of ease of use. Disadvantages such as the difficulty of opening tin cans, easily deformation in the cans, too much unit weight of the cans have been eliminated.

One of the studies carried out to present the legumes to consumers after making them ready for consumption is the subject of the patent entitled "Pi 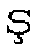 irilmi 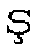 kurutulmu 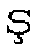 bakliyat ve pi 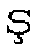 irilmemi 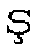 hububattan olu 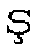 an besin kar 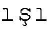 m 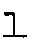 " ("food mixture consisting of cooked dried legumes and raw cereals") and numbered 2010/06379. The invention relates to a food mixture which can be used in addition to various rice and other foods, obtained by mixing the dry legumes with cereals contained the food industry, and to a production process for obtaining this mixture. The afore-mentioned invention, in particular, relates to a food mixture comprising at least one legume selected from dry pulses, such as dry beans, lentils, chickpeas, dry green peas, soybeans and at least one cereal selected from grains such as wheat, barley, rice, corn, cracked wheat, rye, oats in order to obtain healthier and more nutritious meals.

Another study is the subject of patent numbered 2003/01567 and entitled "Toz formuna getirilen bakliyatin kullanimi" ("use of legumes turned into powder form"). The afore-mentioned invention relates to legumes treated for ease of use for eliminating the disadvantages of food applications, characterized in that the natural proportions of legumes such as red lentils, green lentils, or any mixture thereof, chickpeas or beans are turned into semi-processed product in powder form by making them ready for the use by applying any one of the methods such as crushing, grinding, milling, preferably by micronizing them. Also, in order to supply protein in meals, a healthier diet will be obtained by using them instead of meat.
In conclusion, the need for product comprising practical boiled legume and the production method of this product which eliminates the drawbacks existing in the state of the art, and the insufficiency of the existing solutions have made it essential to make an improvement in the related technical field.

### Advantages Provided by the Invention

The present invention is related to product comprising practical boiled legumes and the production method thereof, which meets the needs mentioned above, eliminates all the disadvantages and provides some additional advantages.

On the basis of state of the art, the object of the invention is to provide consumer with a completely natural product which is sanitized from bacteria and spore thanks to the product which comprises the practical boiled legumes and the production method thereof.

The object of the invention is to provide that the consumers can reach healthy, natural boiled legumes whenever they want thanks to the product containing practical boiled legumes and the production method thereof.

A further object of the invention is to provide that it is cleaned from all the bacteria and spores by the sterilization treatment at various temperatures and pressures by virtue of the developed product containing practical boiled legumes and the production method of this product.

A further object of the invention is to provide that it can be safely stored as long as the packaging is not opened during the shelf life by virtue of the developed product containing practical boiled legumes and the production method of this product.

A further object of the invention is to provide that the product is formed such that it is easy to use, its package is light and it can be consumed by heating in a microwave oven or frying pan in a short time or directly without heating, thanks to the product containing practical boiled legumes and the production method of this product.

A further object of the invention is to ensure that the color loss is reduced to minimum, the original taste and structure of the food is preserved and that the packaging material used is not damaged during the production stage by means of the fact that the product containing practical boiled legumes is taken into steam air sprayed two-stage autoclave.

A further object of the invention is to ensure that the problems originating from tin cans are eliminated by means of the product containing practical boiled legumes and the use of retort pouch as packaging material in the production method of this product.

The structural and the characteristic features and all advantages of the invention will be understood more clearly with the detailed description written below and the assessment should be made by taking this detailed description into consideration.

### Detailed Description of the Invention

This detailed description has been given solely for better understanding of the product containing practical boiled legumes and the production method thereof being subject of the invention as a sample and does not have any restrictive effect.

The product containing practical boiled legumes and the production method thereof that is subject matter of the invention provide that the consumers can reach healthy, natural boiled legumes whenever they want. Legumes are very important for health. Recent researches have shown that legumes have a variety of benefits, such as containing high wall and vegetable proteins, being rich in terms of B vitamins and some minerals. Legumes containing high fiber and low fat are important for health. Legumes, which are rich in terms of protein, are at the top of the foodstuffs that can substitute for meat. Negative factors such as saturated fat and cholesterol which are contained by the meat, are not contained by the legumes. Furthermore, the legumes which are extremely rich in fiber, should be consumed in weight loss diets because it regulates intestinal activity and provides a feeling of satiety. It is stated that legumes do not contain cholesterol which causes coronary heart diseases and vessel stiffness and that they regulate intestinal activities and prevent large intestine and stomach cancer, constipation and stomach insufficiency due to its high fiber content. The protease inhibitors in their structures prevents cancer formation. Said product comprising practical boiled legumes and the boiled legumes obtained by the production method of this product can be added in salads, soups, haricot bean salads and meals, and can be safely stored as long as the packaging is not opened during the shelf life by destroying the microorganisms in its structure at high pressure and temperature. In the production method of the said product comprising boiled legumes, steam air spraying two-stage autoclave is used. Autoclave apparatus are used in medical and laboratory technology, pharmacy and health sector for a remarkable period of time. Sterilization is the main application area in this case. There are also a variety of application areas in food and fresh product industries, industrial researches and research institutes for water and environmental sectors. Sterilization is the physical or chemical process that is used for cleaning any object or substance from all living forms and all microorganisms that are together with it. The term microorganism; is a general term comprising algae, protozoon, fungi, bacteria and viruses. Death for microorganisms; is losing the development and segmentation skills forever and being unable to recover. Killing the microorganisms by physical or chemical methods occurs as a first-grade reaction. This means that methods of killing microorganisms will not kill all of the microorganisms in a population at once and instantly. The color loss in the product is reduced to minimum, the original taste and structure of the food is preserved and the packaging material used is not damaged during the production stage by means of the fact that the steam air sprayed two-stage autoclave is used for said product containing practical boiled legumes and the production method of this product. The packaging material used is a high temperature-resistant and microwave-resistant retort pouch. Retort pouches are flexible laminated food packages that can resist heat treatment. Shelf life is as long as metal cans. Retort pouches are considered as the most important development in packaging of food since the metal cans. The microorganisms in the structure of the product which comprises practical boiled legumes and can be consumed in a short time are destroyed at high pressure and temperature and the product can be safely stored as long as the packaging is not opened during the shelf life. Thanks to the said product containing boiled legumes, the consumer can reach healthy, natural boiled legumes whenever they desire and can easily consume by heating it in a microwave oven or in a pan or directly without heating.

In the production method of the said product containing practical boiled legumes, primarily beans, chickpeas and similar legumes are first soaked in water for 12-20 hours in order to increase the cooking quality and to cook homogeneously. Drained legumes are boiled in boiling units for 2-5 minutes. The wastages occurred during boiling are removed from the environment by sorting out in the sorting unit. Filling is conducted by adding salty water at a ratio of 1-2% to the product which can be filled at any desired portion. High temperature resistant and high pressure resistant retort pouches are used in the packaging stage. Then, the packaged products are placed in the autoclave for two-stage sterilization. The packaged product reaches up to 95-100C° during the first sterilization stage and remains at this temperature for approximately 5-10 minutes. Subsequently, the product is kept at a temperature of 120-122°C under high pressure for 10-20 minutes and all the bacteria and spores are killed therein. After the second stage, rapid cooling stage is started and the product temperature is reduced down to 20-30C°.

The protection scope of this application is specified under claims and can definitely not be limited to those described with the aim of illustration. It is clear that any innovation to be provided by a person skilled in the art by means of change in parts in form and use of similar embodiments can be applied in other areas for similar objects. Therefore, it is obvious that such embodiments will be devoid of novelty and the criteria of surpassing the state of the art especially in the existence of our application.

## Claims

1. The invention is the product containing practical boiled legumes and the production method of this product, **characterized in that** it comprises the following process steps;
- keeping legumes such as beans, chickpeas and the like in water for increasing the cooking quality and for homogeneous cooking,
- boiling the legumes that are drained,
- removing the wastages occurred during boiling from the environment by sorting out,
- filling the product into retort pouches at desired portions,
- performing the first sterilization of the packaged product in the autoclave, performing the second sterilization of the product in the autoclave after the completion of the first sterilization step,
- cooling and presenting to consumer after the sterilization is completed.

2. Product containing practical boiled legumes and the production method of this product according to claim 1, **characterized in that** it comprises the process step of keeping beans, chickpeas and similar legumes in water for 12-20 hours in order to increase the cooking quality and the homogeneous cooking.

3. Product containing practical boiled legumes and the production method of this product according to claim 1, **characterized in that** it comprises the process step of boiling of the drained legumes 2-5 minutes in the boiling unit.

4. Product containing practical boiled legumes and the production method of this product according to claim 1, **characterized in that** it comprises the step of filling process by adding salty water at a ratio of 1-2% to the product which can be filled at any desired portion.

5. Product containing practical boiled legumes and the production method of this product according to claim 1, **characterized in that** it comprises the process step of subjecting the packaged product to a temperature of 95-100°C during the first sterilization step.

6. Product containing practical boiled legumes and the production method of this product according to claim 1, **characterized in that** it comprises the process step of keeping the packaged product for about 5-10 minutes at a temperature of 95-100°C during the first sterilization step.

7. Product containing practical boiled legumes and the production method of this product according to claim 1, **characterized in that** it comprises the process step of performing the second sterilization to the product by applying 120-122°C temperature under high pressure for killing all the bacteria and spores therein after the first sterilization stage.

8. Product containing practical boiled legumes and the production method of this product according to claim 1, **characterized in that** it comprises the process step of keeping the product in the second sterilization stage for about 5-10 minutes for killing all the bacteria and spores therein.

9. Product containing practical boiled legumes and the production method of this product according to claim 1, **characterized in that** it comprises the process step of reducing the temperature down to 20-30°C by proceeding to rapid cooling stage after the second sterilization.

10. Product containing practical boiled legumes and the production method of this product according to claim 1, **characterized in that** it comprises the process step of performing the first and the second sterilization respectively by air mixing sterilization technique in order to eliminate all the bacteria and spores in the product and thereby extending the shelf life of the product.
